# EUROPEAN PATENT APPLICATION

(11) **EP 4 718 681 A1**
(43) Date of publication of application: **01.04.2026**
(21) Application number: 25200570.7
(22) Date of filing: 05.09.2025
(51) Int. Cl.: H02J 7/65, H02J 7/70, H02J 7/90

(54) **POWER SUPPLY DEVICE, POWER SUPPLY METHOD, AND PROGRAM**

(30) Priority: 24.09.2024 JP 2024164884
(71) Applicant: Casio Computer Co., Ltd., Tokyo 151-8543 (JP)
(72) Inventor: Hirao, Mizuho, Shibuya-ku, Tokyo 205-8555 (JP)
(74) Representative: Grünecker Patent- und Rechtsanwälte PartG mbB

(57) **Abstract**

A power supply device (100) includes a power supplier (160) to supply power to a power reception device (200) and a temperature detector (140) to detect temperature of a predetermined part. The power supply device (100) includes a controller (170) to control power supply by the power supplier (160) to the power reception device (200) based on reference temperature and detection temperature detected by the temperature detector (140). In a case where, at start of power supply, a first specified time has elapsed since end of a previous power supply and a rate of change in the detection temperature during a specified period immediately before the start of power supply is within a reference value, the controller (170) updates the reference temperature to the detection temperature that is at the start of power supply.

## Description

The present disclosure relates to a power supply device, a power supply method, and a program.

A power supply device for supplying power to a power reception device with a built-in battery is known. For example, Unexamined Japanese Patent Application Publication No. 2015-195633 describes a non-contact power supply device that supplies power to a power reception device in a non-contact manner. The non-contact power supply device described in Unexamined Japanese Patent Application Publication No. 2015-195633 stops power supply in response to a detection temperature exceeding a predetermined temperature due to foreign objects being present on a charging stand.

However, there is considered to be room for improvement in the power supply control described in Unexamined Japanese Patent Application Publication No. 2015-195633. For example, while the predetermined temperature is not adjusted in the power supply control described in Unexamined Japanese Patent Application Publication No. 2015-195633, it is considered preferable for the predetermined temperature to be adjustable. Therefore, technology that enables appropriate power supply based on the detection temperature is desired.

The present disclosure is made with the view of the above circumstances, and an objective of the present disclosure is to achieve appropriate power supply based on the detection temperature.

A power supply device according to an embodiment of the present disclosure includes
a power supplier to supply power to a power reception device, and
a temperature detector to detect temperature of a predetermined part,
characterized by
a controller to control power supply by the power supplier to the power reception device based on reference temperature and detection temperature detected by the temperature detector,
the controller
   in a case where, at start of power supply, a first specified time has elapsed since end of a previous power supply and a rate of change in the detection temperature during a specified period immediately before the start of power supply is within a reference value, updates the reference temperature to the detection temperature that is at the start of power supply.

According to the present disclosure, appropriate power supply based on the detection temperature can be achieved.

A more complete understanding of this application can be obtained when the following detailed description is considered in conjunction with the following drawings, in which:
FIG. 1 is a perspective view of a power supply device and a power reception device according to Embodiment 1;
FIG. 2 is a cross-sectional view of the power supply device according to Embodiment 1;
FIG. 3 is an enlarged view of an area enclosed by a dashed line 50 illustrated in FIG. 2;
FIG. 4 is a configuration diagram of a power transmission system according to Embodiment 1;
FIG. 5 is a diagram illustrating an example of a relationship between time and detection temperature in a case where a reference temperature is not updated;
FIG. 6 is a diagram illustrating an example of a relationship between time and detection temperature in a case where the reference temperature is updated;
FIG. 7 is a flowchart illustrating power supply management processing performed by the power supply device according to Embodiment 1;
FIG. 8 is a flowchart illustrating power supply control processing illustrating in FIG. 7;
FIG. 9 is a flowchart illustrating power supply management processing performed by a power supply device according to Embodiment 2; and
FIG. 10 is a configuration diagram of a power transmission system according to Embodiment 3.

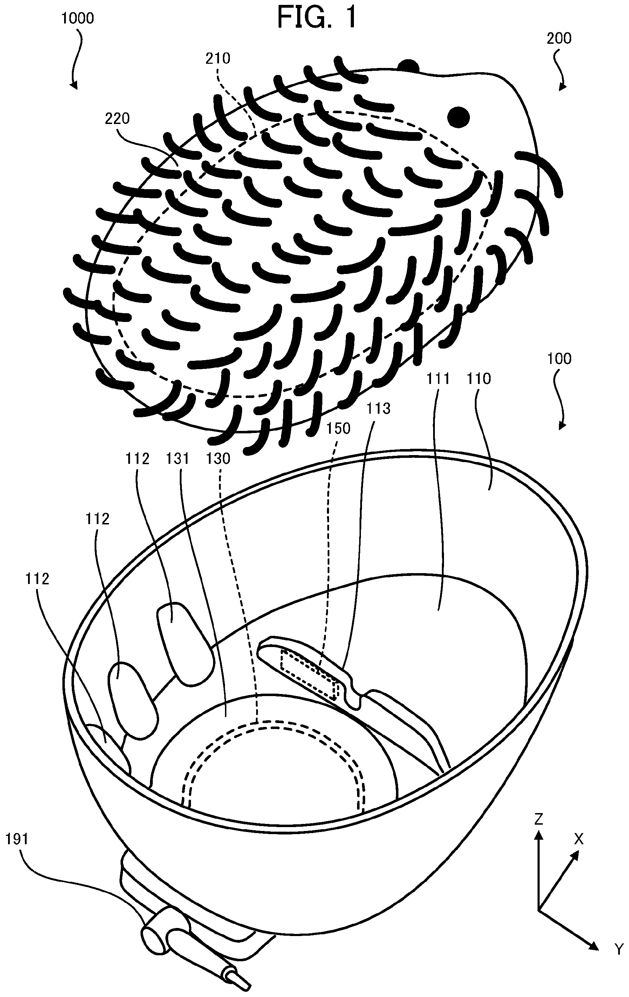

Embodiments of the present disclosure are described below in detail with reference to drawings. The same reference signs are used to refer to the same or corresponding components throughout the drawings. A power transmission system 1000 according to Embodiment 1 illustrated in FIG. 1 is a system in which a power supply device 100 wirelessly supplies power to a power reception device 200. The power supply device 100 wirelessly supplies power to the power reception device 200 in response to the power reception device 200 having been accommodated in a housing 110 of the power supply device 100. Wireless means that there are no cable connections, electrode contacts, or the like.

The power supply device 100 functions as a charging station to charge a battery included in the power reception device 200. The power supply device 100 receives power from an alternating current (AC) adapter equipped with a direct current (DC) plug 191. The power supply device 100 includes the housing 110 for accommodating the power reception device 200. The housing 110 has a bowl-like shape that imitates a house of a small animal. Specifically, the housing 110 has a shape that resembles an egg split in half along a plane that includes the central axis extending in the longitudinal direction. A base plate 111 for placing the power reception device 200 is provided at the bottom of the housing 110. The base plate 111 has an embedded coil cover 131 such that the upper surfaces of the base plate 111 and the coil cover 131 are aligned on the same plane. The power reception device 200 is placed on the base plate 111 with the embedded coil cover 131. The coil cover 131 is a member that protects a power transmission coil 130 and has a disc shape.

A plurality of protrusions 112 is disposed inside the side wall of the housing 110. The protrusions 112 are members to restrict movement of the power reception device 200 in the horizontal direction in a state in which the power reception device 200 is accommodated in the housing 110 to enable power supply to the power reception device 200 (hereinafter referred to as a "accommodated state" as appropriate). A protrusion 113 is provided in the central area of the base plate 111. The protrusion 113 is a member to restrict movement of the power reception device 200 in the longitudinal direction of the housing 110 in the accommodated state. The protrusion 113 has a shape extending in the width direction of the housing 110. The protrusions 112 and the protrusion 113 are preferably arranged to allow for some movement of the power reception device 200 so that the movement is not excessively restricted. In this configuration, for example, the breathing motion simulated by the power reception device 200 imitating a small animal within the housing 110 imitating a house of the small animal is not restricted. A magnet 150 is provided inside the protrusion 113. Power supply by the power supply device 100 to the power reception device 200 starts in response to the power reception device 200 having detected a magnetic field generated by the magnet 150, with the power reception device 200 accommodated in the housing 110.

In the present embodiment, the axis extending in the vertical direction is the Z-axis, the axis extending in the direction orthogonal to the Z-axis is the X-axis, and the axis extending in the direction orthogonal to both the Z-axis and the X-axis is the Y-axis. In the present embodiment, the power supply device 100 is arranged such that the direction extending from the rear end to the front end of the housing 110 in the longitudinal direction is the positive direction of the X-axis. The front end in the longitudinal direction of the housing 110 is the more pointed end among both ends in the longitudinal direction of the housing 110.

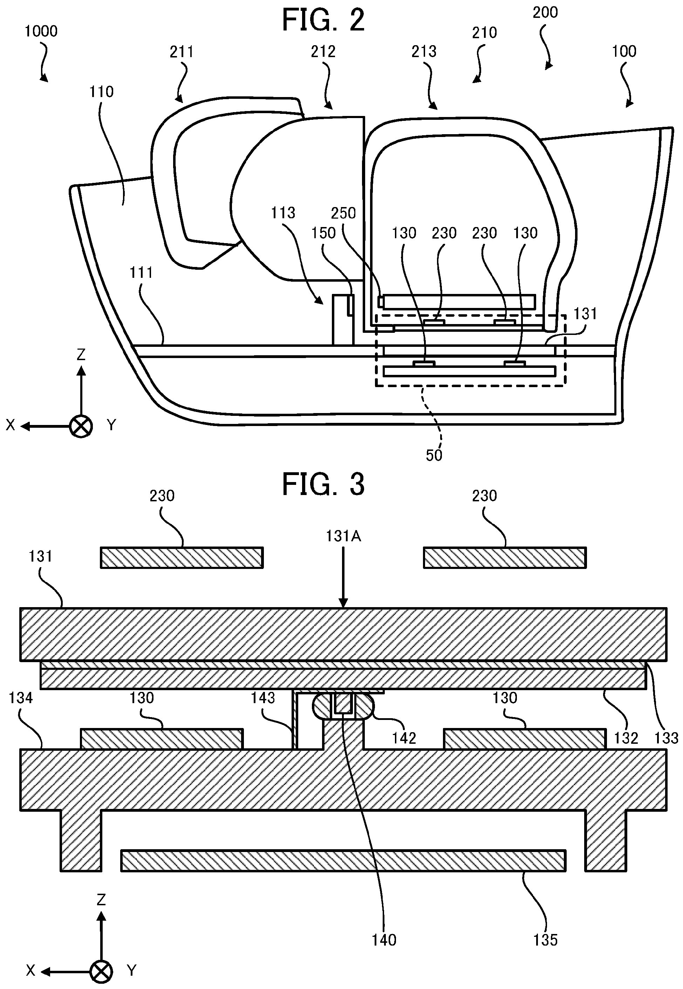

The power reception device 200 is a device that operates on power stored in the built-in battery. The power reception device 200 charges the built-in battery with power supplied by the power supply device 100. In the present embodiment, the power reception device 200 is a robot that operates autonomously without direct user operation. More specifically, the power reception device 200 is a pet robot that imitates a small animal. The power reception device 200 includes a body 210 and an exterior 220. The body 210 contains various components necessary for operation of the power reception device 200. As illustrated in FIG. 2, the body 210 includes a head 211, a joint 212, and a torso 213. FIG. 2 is a drawing schematically illustrating a cross-section of the power supply device 100 and the power reception device 200 in the accommodated state, cut along a plane extending in the longitudinal and vertical directions of the housing 110.

In FIG. 2, for ease of understanding, the power reception device 200 is illustrated with the exterior 220 omitted, and only the body 210 is illustrated. Also, in FIG. 2, for ease of understanding, the hatching on the cross-sections is omitted. The head 211 corresponds to the head of a small animal. The joint 212 connects the head 211 to the torso 213 rotatably. The torso 213 corresponds to the torso of a small animal. A power reception coil 230 and a magnetic sensor 250 are disposed inside the torso 213. The exterior 220 covers the body 210. The exterior 220 includes eye-like decorative components, and fluffy fur. The surface material of the exterior 220 is, for example, made of an artificial pile fabric that imitates a small animal's fur, to simulate the feel of a small animal. The lining of the exterior 220 is made of, for example, fibers, leather, rubber, or the like. Since the exterior 220 is made of a flexible material, the exterior 220 can follow movement of the body 210.

The power reception device 200 may be accommodated in the housing 110 either automatically or manually. For example, the power reception device 200 may automatically move into the housing 110 in response to the remaining battery level falling below a reference value. Alternatively, the user may accommodate the power reception device 200 in the housing 110 in accordance with notification from the power reception device 200. This notification indicates that the remaining battery level is low and is issued by the power reception device 200 in response to the remaining battery level falling below the reference value.

As illustrated in FIG. 2, in response to the power reception device 200 being accommodated in the housing 110, the magnetic sensor 250 and the magnet 150 come close to each other, enabling detection of the magnetic field generated by the magnet 150 through the magnetic sensor 250. Additionally, in response to the power reception device 200 being accommodated in the housing 110, the power transmission coil 130 and the power reception coil 230 come into close proximity and face each other, allowing the power supply device 100 to supply power to the power reception device 200.

As illustrated in FIG. 3, the power supply device 100 includes the power transmission coil 130, the coil cover 131, a heat conduction member 132, a thermally conductive double-sided tape 133, a pedestal 134, a circuit board 135, a temperature sensor 140, a pressing member 142, and a flexible printed wiring board 143. The coil cover 131 protects the power transmission coil 130. The upper surface of the coil cover 131 serves as a placement surface 131A on which the power reception device 200 is positioned. The coil cover 131 is made of a material that does not generate heat during power supply using the power transmission coil 130. For example, the coil cover 131 can be made of plastic. On the lower surface of the coil cover 131, the heat conduction member 132 is attached via the thermally conductive double-sided tape 133. The heat conduction member 132 is made of a material with high thermal conductivity. For example, the heat conduction member 132 is made of acrylic-based materials, silicone-based materials, and the like. The thermally conductive double-sided tape 133 is made of a material with high thermal conductivity. For example, the thermally conductive double-sided tape 133 is formed by applying a high thermal conductivity acrylic adhesive to both sides of films such as polyetheretherketone resin or polyethylene terephthalate.

The pedestal 134 is a member that supports the power transmission coil 130. The power transmission coil 130 is placed on the upper surface of the pedestal 134. The pedestal 134 is made of, for example, insulating material, such as plastic. The circuit board 135 is a printed circuit board on which various electronic components are mounted. The circuit board 135 includes circuits, such as a power transmission circuit and a control circuit. The temperature sensor 140 is a sensor that detects the temperature of the heat conduction member 132. The temperature sensor 140 is a contact-type temperature sensor such as a thermistor, a resistance thermometer, or a linear resistor. The temperature sensor 140 is provided in the central area of the lower side of the heat conduction member 132. The temperature sensor 140 is mounted on the flexible printed wiring board 143 and received within a through-hole (not illustrated) of the pressing member 142. The temperature information detected by the temperature sensor 140 is transmitted via the flexible printed wiring board 143 to the electronic components mounted on a circuit board 108.

The pressing member 142 is a member for applying force from the pedestal 134 to press the printed wiring board 143 against the heat conduction member 132. The pressing member 142 is made of elastic materials like rubber. The pressing member 142 is placed in the central area of the lower side of the heat conduction member 132. The pressing member 142 includes a through-hole for receiving the temperature sensor 140. With the pressing member 142, the printed wiring board 143 can be pressed against the heat conduction member 132 without applying load to the temperature sensor 140. The flexible printed wiring board 143 is a wiring board for transmitting the temperature information from the temperature sensor 140 to the electronic components on the circuit board 108. The flexible printed wiring board 143 is a wiring board formed with a circuit pattern on a resin film with high thermal conductivity. In a case where a foreign object on the coil cover 131 generates heat during power supply, the heat emitted by the foreign object is transmitted via the coil cover 131, the thermally conductive double-sided tape 133, the heat conduction member 132, and the flexible printed wiring board 143 to the temperature sensor 140. In the present embodiment, the foreign object is a metallic foreign object that generates heat due to changes in magnetic flux.

The temperature sensor 140 is provided in the central area of the lower side of the heat conduction member 132. This allows efficient detection of heat emitted by foreign objects, regardless of their location on the coil cover 131. Furthermore, the heat conduction member 132 diffuses the heat emitted by the foreign objects, thus alleviating the rise in temperature of the foreign objects. The thermal conductivity of the coil cover 131 is lower than that of the heat conduction member 132. As a result, thermal conduction on the coil cover 131 is suppressed, thereby preventing the heat emitted by the foreign objects from being transferred to the power reception device 200.

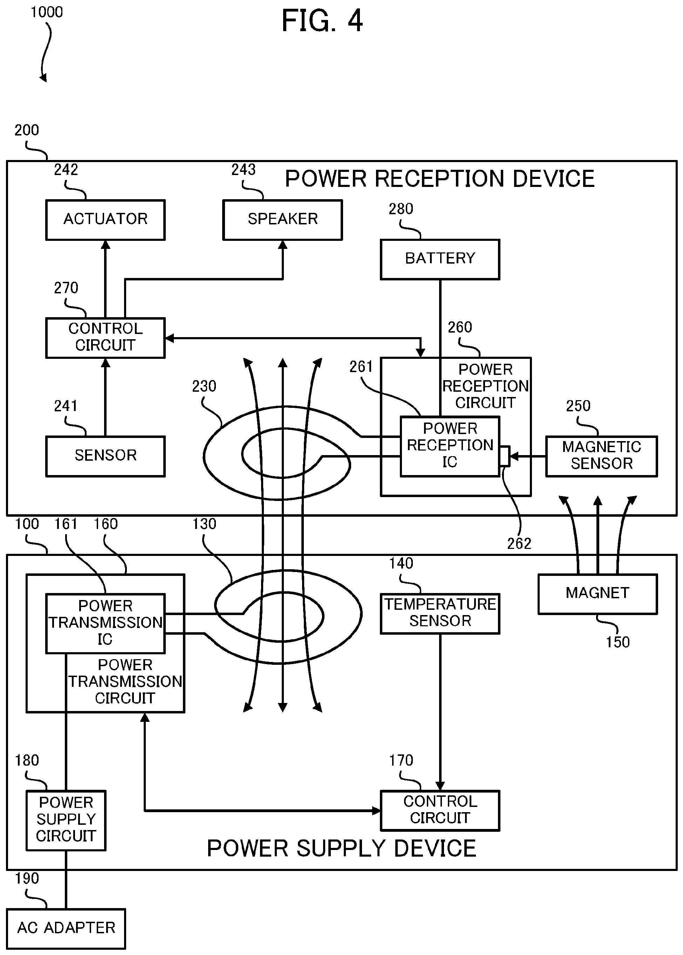

The power transmission system 1000 illustrated in FIG. 4 includes the power supply device 100 and the power reception device 200. The power supply device 100 includes the power transmission coil 130, the temperature sensor 140, the magnet 150, a power transmission circuit 160, a control circuit 170, and a power supply circuit 180. The power reception device 200 includes the power reception coil 230, a sensor 241, an actuator 242, a speaker 243, the magnetic sensor 250, a power reception circuit 260, a control circuit 270, and a battery 280. The power transmission coil 130 is a coil designed to couple with the power reception coil 230 and supply power wirelessly. The power transmission coil 130 induces a magnetic flux with a varying magnitude as an alternating current flows through the power transmission coil 130. The power transmission coil 130 is a wire wound around an axis extending in the Z-axis direction. In the accommodated state, the power transmission coil 130 is disposed in a predetermined position within the power supply device 100 such that the power transmission coil 130 faces the power reception coil 230. In the accommodated state, the central axis of the power reception coil 230 and the central axis of the power transmission coil 130 are close to each other.

The temperature sensor 140 detects the temperature of a predetermined part of the power supply device 100. In the present embodiment, the temperature sensor 140 detects the temperature of the heat conduction member 132. In a case where a foreign object including metal is present around the power transmission coil 130, the change in magnetic flux induced by the power transmission coil 130 causes eddy currents to flow within the foreign object, causing the foreign object to generate heat. The temperature sensor 140 is mainly used to detect the heat generation of the foreign object. The temperature sensor 140 supplies temperature information indicating a result of the detection of the temperature to the control circuit 170. The temperature sensor 140 is an example of a temperature detector, and the heat conduction member 132 is an example of a predetermined part.

The magnet 150 is an object that emits magnetism. The magnet 150 has two poles, an N pole and an S pole, and is an object that is a source of a bipolar magnetic field. The magnet 150 is arranged in a specific part in the power supply device 100 to indicate that the power supply device 100 is a suitable power supply device for supplying power to the power reception device 200. In the present embodiment, the specific part is the protrusion 113. The magnet 150 is arranged at a position and angle corresponding to the position and angle of the magnetic sensor 250. In other words, in the accommodated state, the magnet 150 is positioned and angled to enable detection by the magnetic sensor 250 of the magnetism generated by the magnet 150. In the present embodiment, the magnet 150 is a permanent magnet.

The power transmission circuit 160 is a circuit for supplying power to the power reception device 200. The power transmission circuit 160 is designed to supply power wirelessly via the power transmission coil 130. The power transmission circuit 160 supplies, to the power transmission coil 130, alternating current power based on the direct current power supplied from the power supply circuit 180. The power transmission circuit 160 operates in accordance with the control by the control circuit 170. The power transmission circuit 160 communicates with the power reception circuit 260. Specifically, in response to the power transmission circuit 160 receiving a power supply request from the power reception circuit 260, the power transmission circuit 260 starts supplying power to the power reception circuit 260. The power transmission circuit 160 includes a power transmission IC 161. The power transmission IC 161 converts the direct current power generated by the power supply circuit 180 into alternating current power and supplies the alternating current power to the power transmission coil 130. The power transmission circuit 160 is an example of a power supplier. The control circuit 170 manages the overall operation of the power supply device 100. For example, the control circuit 170 controls the power transmission circuit 160 to supply power to the power reception device 200. The control circuit 170 controls power supply to the power reception device 200 based on the detection results of the temperature sensor 140. In response to detection of an abnormality, the control circuit 170 notifies the power reception device 200 about the detection of the abnormality, and may cause the power reception device 200 to make notification that an abnormality has occurred. Examples of abnormalities include excessive temperature increases caused by foreign objects or misalignment, and reduced transmission efficiency due to misalignment. The control circuit 170 is an example of a controller.

The control circuit 170 includes components such as a central processing unit (CPU), a read only memory (ROM), a random access memory (RAM), a real time clock (RTC), a flash memory, and the like. The CPU, also known as a central processor, a central arithmetic unit, a processor, a microprocessor, a microcomputer, a digital signal processor (DSP), or the like, functions as the central processing unit that executes operations and calculations related to the control of the control circuit 170. In the control circuit 170, the CPU reads programs and data stored in the ROM, the flash memory, or the like, and uses RAM as a work area to perform integrated control of the control circuit 170. The RTC is, for example, an integrated circuit having a clocking function. Note that, the CPU is capable of specifying a current date and time from time information read out from the RTC.

The power supply circuit 180 generates various types of power supply voltages for use by the power supply device 100. For example, the power supply circuit 180 steps down or steps up the direct current voltage supplied from AC adapter 190 to generate the power supply voltages for the various components of the power supply device 100. The AC adapter 190 is a device that converts alternating current power into direct current power. In the present embodiment, the AC adapter 190 converts the alternating current power supplied from the commercial power supply into direct current power, and supplies the direct current power to the power supply circuit 180. The AC adapter 190 includes a DC plug 191 to be connected to the power supply circuit 180. The power reception coil 230 is a coil that couples with the power transmission coil 130 and receives power wirelessly. The power reception coil 230 induces an electromotive force in accordance with changes in the magnetic flux induced by the power transmission coil 130. The power reception coil 230 is a wire wound around an axis extending in the Z-axis direction.

The sensor 241 is a sensor for detecting various physical quantities. Examples of the sensor 241 include a touch sensor, an acceleration sensor, an angular velocity sensor, a sound sensor, an illuminance sensor, and a temperature sensor. The touch sensor, for example, detects that the user touches the exterior 220. The acceleration sensor, for example, detects acceleration applied to the entire or part of the power reception device 200. The angular velocity sensor, for example, detects an angular velocity of the entire or part of the power reception device 200. The sound sensor, for example, detects sound emitted by the user. The illuminance sensor, for example, detects illuminance around the power reception device 200. The temperature sensor, for example, detects internal or external temperature of the power reception device 200. The sensor 241 supplies to the control circuit 270 an electrical signal indicating a result of the detection. The actuator 242 is a mechanism for operating each part of the power reception device 200. The actuator 242 operates in accordance with the control by the control circuit 270. For example, the actuator 242 is a mechanism for moving the power reception device 200 forward and backward and for rotating the head 211 relative to the torso 213. The actuator 242 includes, for example, a stepping motor.

The speaker 243 emits sound in accordance with the control by the control circuit 170. For example, in response to the power supply device 100 detecting an abnormality, the speaker 243 outputs a sound notification indicating that an abnormality is detected, in accordance with an audio signal supplied from control circuit 170. The magnetic sensor 250 is a sensor that detects magnetism. The magnetic sensor 250 detects magnetism generated by the magnet 150 provided in a specific part of the power supply device 100. The magnetic sensor 250 outputs the first voltage in response to detecting magnetism and outputs the second voltage in response to not detecting magnetism. The voltage output by the magnetic sensor 250 is applied to an operation control terminal 262 of the power reception IC 261. As described later, power supply is allowed in response to detection of magnetism and not allowed in response to lack of detection of magnetism. The magnetic sensor 250 is positioned and angled to avoid detecting the magnetism generated by the power transmission coil 130.

The power reception circuit 260 is a circuit that receives power wirelessly through the power reception coil 230. The power reception circuit 260 supplies, to the battery 280, direct current power based on the alternating current power supplied from the power supply device 100 through the power reception coil 230. The power reception circuit 260 operates in accordance with control by the control circuit 270. The power reception circuit 260 communicates with the power transmission circuit 160. For example, the power reception circuit 260 sends a power supply request to the power transmission circuit 160 to receive power from the power transmission circuit 160. The power reception circuit 260 includes a power reception integrated circuit (IC) 261. The power reception IC 261 converts alternating current power generated by the electromotive force induced by the power reception coil 230 into direct current power, and supplies the direct current power to the battery 280. The power reception IC 261 includes an operation control terminal 262 for controlling the operation of the power reception IC 261. The power reception IC 261 operates with a first voltage applied to the operation control terminal 262 and stops operating with a second voltage applied to the operation control terminal 262.

In response to the first voltage being applied to the operation control terminal 262, the power reception IC 261 operates. Therefore, the power reception circuit 260 sends a power supply request to the power transmission circuit 160, and the power supply device 100 performs power supply. In response to the second voltage being applied to the operation control terminal 262, the power reception IC 261 stops operating. Thus, the power reception circuit 260 does not send a power supply request to the power transmission circuit 160, and power supply by the power supply device 100 is not performed. The control circuit 270 controls the overall operation of the power reception device 200. For example, the control circuit 270 operates the power reception device 200 by operating the actuator 242 based on a result of detection made by the sensor 241. Also, in response to the control circuit 270 receiving a notification from the power supply device 100 that an abnormality is detected, the control circuit 270 controls the speaker 243 to notify the user that an abnormality is detected. The control circuit 270 includes a CPU, a ROM, a RAM, an RTC, a flash memory, and the like.

The battery 280 is a secondary battery capable of charging and discharging. The battery 280 is a power source of the power reception device 200. In other words, the battery 280 supplies power to the sensor 241, the actuator 242, the magnetic sensor 250, the power reception circuit 260, the control circuit 270, etc. The battery 280 is charged by the power supplied from the power reception circuit 260. The control circuit 170 controls power supply by the power transmission circuit 160 to the power reception device 200 based on reference temperature and detection temperature detected by the temperature sensor 140.

In response to the detection temperature having increased to the interruption temperature during power supply, the control circuit 170 interrupts power supply. In response to the detection temperature dropping to the resumption temperature during the interruption of power supply, the control circuit 170 resumes power supply. The interruption temperature is a temperature at which power supply is interrupted. The resumption temperature is a temperature at which power supply is resumed. The interruption temperature and the resumption temperature are set based on the reference temperature. The reference temperature is basically the detection temperature at the start of power supply. The interruption temperature is higher than the reference temperature by a first predetermined temperature. The resumption temperature is lower than the interruption temperature by a second predetermined temperature. In the present embodiment, the first predetermined temperature is 20°C, and the second predetermined temperature is 5°C. This means a temperature difference between the reference temperature and the resumption temperature is smaller than a temperature difference between the reference temperature and the interruption temperature. Furthermore, the resumption temperature is set to be higher than the reference temperature.

In a case where, at start of power supply, a first specified time has elapsed since end of the previous power supply, and a rate of change in the detection temperature in a specified period immediately before the start of power supply is within a reference value, the control circuit 170 updates the reference temperature to the detection temperature that is at the start of power supply. In a case where, at the start of power supply, the first specified time has elapsed since the end of the previous power supply, and the rate of change is not within the reference value, the control circuit 170 does not update the reference temperature. Also, in a case where, at the start of power supply, the first specified time has not elapsed since the end of the previous power supply, the control circuit 170 does not update the reference temperature. The first specified time is a duration shorter than the time considered necessary for decrease of the detection temperature having rose due to power supply. The first specified time is, for example, 2 minutes. The specified period is a target duration during which the rate of change in the detection temperature is derived. The specified period is, for example, a duration of 2 minutes immediately before the start of power supply.

The rate of change corresponds to a magnitude of change in the detection temperature during the specified period. The definition of the rate of change can be adjusted as appropriate. For example, the rate of change may be represented as a slope of a straight line that approximates the detection temperature on a graph depicting the detection temperature against time during the specified period. In other words, the rate of change can also be a regression coefficient, which is the slope of the regression line obtained from regression analysis where the detection temperature is treated as the dependent variable and the detection time as the independent variable during the specified period. Alternatively, the rate of change may be calculated as the temperature difference between the detection temperature at the start time of the specified period and the detection temperature at the end time of the specified period, divided by the length of the specified period. Additionally, the rate of change may be a value obtained by dividing the temperature difference between the maximum and minimum detection temperatures during the specified period, by the length of the specified period. The reference value is a threshold used as a criterion for determining the rate of change. For example, assuming the detection temperature continues to decrease during the specified period, the rate of change may be defined as the percentage of the detection temperature decrease during the specified period relative to the length of the specified period. Furthermore, it is assumed that the length of the specified period is two minutes and the reference value is 2.5°C per minute. In this case, the reference temperature is updated in response to the detection temperature not decreasing by 5°C or more within the specified period, whereas the reference temperature is not updated in response to the detection temperature decreasing by 5°C or more within the specified period.

As such, the control circuit 170 updates the reference temperature to the current detection temperature only in a case where a certain amount of time has elapsed since the previous power supply and the most recent detection temperature is stable. In a case where not much time has elapsed since the previous power supply, the control circuit 170 does not update the reference temperature. The control circuit 170 ends power supply in response to the detection temperature having increased to a predetermined upper limit temperature during power supply. In other words, the control circuit 170 ends the power supply in response to the detection temperature reaching the upper limit temperature, regardless of the comparison result between the detection temperature and the interruption temperature. In the present embodiment, the upper limit temperature is 60°C.

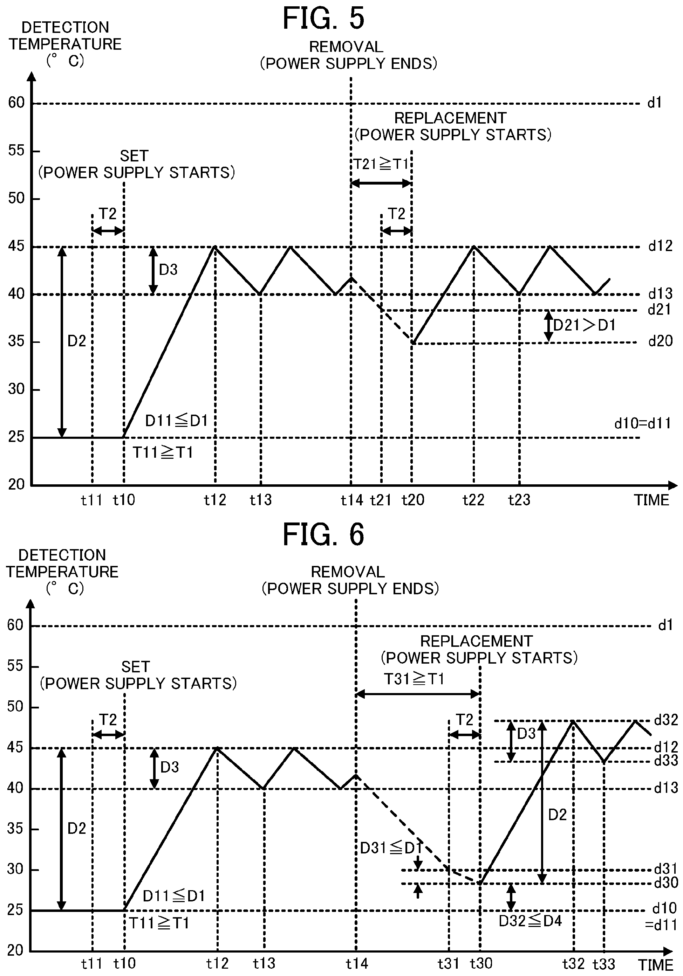

As illustrated in FIG. 5, it is assumed the reference temperature is not updated, and at t10, the power reception device 200 is set on the power supply device 100 and power supply is started. Here, during the specified period immediately before the start of power supply, from t11 to t10, the detection temperature remains constant. In this case, the width of change in the detection temperature during the specified period is 0°C, and the rate of change in the detection temperature during the specified period is equal to or less than the reference value. The elapsed time from the end time of the previous power supply is equal to or greater than the first reference time. In this case, the reference temperature is updated to the current detection temperature. In FIG. 5, d1 is an upper limit temperature, d10 is a detection temperature at t10, d11 is a detection temperature at t11, D11 is a width of change, D1 is a reference width, T11 is an elapsed time from the end time of the previous power supply to t10, T1 is a length of the first specified time, and T2 is a length of the specified period. The reference width is a threshold of the width of change in the detection temperature and corresponds to the temperature difference for the reference value of the rate of change. In other words, the width of change in the detection temperature exceeding the reference width corresponds to the rate of change in the detection temperature exceeding the reference value. For example, in a case where the specified period is 2 minutes long and the reference value is 2.5°C per minute, the reference width D1 is 5°C. At time t10, the reference temperature is set to the current detection temperature d10. The interruption temperature is set to d12, which is higher than the reference temperature by D2. The resumption temperature is set to d13, which is lower than the interruption temperature by D3. Information such as the reference temperature, the interruption temperature, and the resumption temperature is stored in, for example, the flash memory provided in the control circuit 170.

As such, in the present embodiment, the interruption temperature, the resumption temperature, and the like are variable values set based on the detection temperature, rather than fixed values. The reason for this is that it is considered preferable to determine the interruption or resumption of power supply based on the increase in the detection temperature due to the power supply, rather than the detection temperature itself. With this configuration, for example, immediate interruption of power supply in high ambient temperature can be suppressed, and excessive temperature rise due to power supply in low ambient temperature can also be suppressed. In contrast, in a case where the interruption temperature, the resumption temperature, and the like are fixed values, there could be cases where, for example, power supply is immediately interrupted in high ambient temperature, and excessive temperature rise due to power supply in low ambient temperature occurs. Upon start of power supply at t10, the detection temperature begins to rise. Generally, the detection temperature rises during power supply. However, with foreign objects present, the detection temperature rises rapidly. Also, in a case of significant misalignment between the power transmission coil 130 and the power reception coil 230, the detection temperature also rises rapidly. At t12, upon the detection temperature increasing to the interruption temperature d12, power supply is interrupted.

Upon interruption of power supply at t12, the detection temperature decreases. At t13, upon the detection temperature decreasing to the resumption temperature d13, power supply resumes. Upon resumption of power supply at t13, the detection temperature starts to increase again. Subsequently, in the same manner, upon the detection temperature increasing to the interruption temperature power supply is interrupted, and upon the detection temperature decreasing to the resumption temperature, power supply resumes. Here, at t14, upon removal of the power reception device 200 from the power supply device 100, power supply ends. After power supply ends at t14, the detection temperature decreases. At t20, upon the power reception device 200 being placed back on the power supply device 100, power supply resumes.

In the present embodiment, the end of power supply and the interruption of power supply are clearly distinguished, and the start of power supply and the resumption of power supply are clearly distinguished. Specifically, the end of power supply refers to the cessation of power supply due to the removal of the power reception device 200, full charging, or the detection temperature reaching the upper limit temperature, whereas the interruption of power supply refers to the cessation of power supply due to the detection temperature reaching the interruption temperature. The start of power supply refers to the initiation of power supply caused by the placement of the power reception device 200, and the resumption of power supply refers to the initiation of power supply caused by the detection temperature reaching the resumption temperature. T21 is a duration from t14 to t20, d21 is a detection temperature at t21, d20 is a detection temperature at t20, and D21 is a temperature difference between d21 and d20. In a case where T21 is equal to or greater than T1 and D21 is greater than D1, the reference temperature is not updated. In other words, the reference temperature is not updated to the detection temperature d20 at t20 and remains at the detection temperature d10 at t10. Thus, the interruption temperature remains at d12, and the resumption temperature remains at d13. Subsequently, upon start of power supply at t20, the detection temperature increases, and upon the detection temperature reaching the interruption temperature d12 at t22, power supply is interrupted. Upon interruption of power supply at t22, the detection temperature decreases, and upon the detection temperature decreasing to the resumption temperature d13 at t23, power supply resumes.

Next, referring to FIG. 6, an example where the reference temperature is updated is described. The period from t11 to t14 is as described with reference to FIG. 5. At t30, upon the power reception device 200 being placed back on the power supply device 100, power supply starts. T31 is a duration from t14 to t30, d31 is a detection temperature at t31, d30 is a detection temperature at t30, and D31 is a temperature difference between d31 and d30. In a case where T31 is equal to or greater than T1 and D31 is equal to or less than D1, the reference temperature is updated from the detection temperature d10 at t10 to the detection temperature d30 at t30. The interruption temperature is updated to d32, which is higher than d30 by D2. The resumption temperature is updated to d33, which is lower than d32 by D3. Subsequently, upon start of power supply at t30, the detection temperature increases, and upon the detection temperature reaching the interruption temperature d32 at t32, power supply is interrupted. Upon interruption of power supply at t32, the detection temperature decreases, and upon the detection temperature decreasing to the resumption temperature d33 at t33, power supply resumes.

In this manner, in a case where, at the start of power supply, the first reference time has elapsed since the end of the previous power supply and the rate of change in the detection temperature during the specified period immediately before the start of power supply is equal to or less than the reference value, the reference temperature is updated. In contrast, in a case where, at the start of power supply, the first specified time has elapsed since the end of the previous power supply and the rate of change in the detection temperature during the specified period immediately before the start of power supply is greater than the reference value, the reference temperature is not updated. The reason for this is to prevent the reference temperature from being set to an excessively high temperature. Specifically, as described above, in a case where the power reception device 200 is placed back immediately after end of power supply due to removal of the power reception device 200, the detection temperature at the start of power supply is higher compared to room temperature. Thus, if the reference temperature is set to the detection temperature at the start of power supply, the interruption temperature would be set to an excessively high value. Particularly, in a case where placing back the power reception device 200 during power supply is repeated, the reference temperature, the interruption temperature, and the like are set to excessively high temperatures.

However, the interruption temperature being set to an excessively high value permits power supply at high temperatures, which is undesirable. Thus, in a case where, at the start of power supply, the first reference time has elapsed since the end of the previous power supply and the rate of change is greater than the reference value, the reference temperature is not updated, and the previously set reference temperature remains. In a case where power supply starts immediately after the end of power supply, the detection temperature is decreasing, which suggests a large rate of change. In other words, the small rate of change at the start of power supply suggests that it is not immediately after the end of power supply but the detection temperature has decreased to approximately room temperature. Thus, in the present embodiment, the detection of a small rate of change indicates that the detection temperature has sufficiently decreased. In a case where it is clearly immediately after the end of power supply, that is, the first reference time has elapsed since the end of the previous power supply, the reference temperature is not updated.

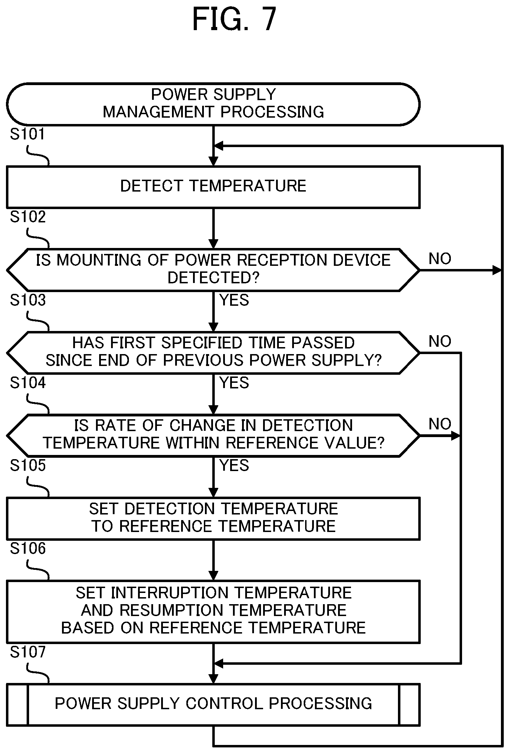

Next, power supply management processing executed by the power supply device 100 is described, as illustrated in FIG. 7. First, the control circuit 170 of the power supply device 100 detects temperature (step S101). For example, the control circuit 170 obtains temperature information indicating the temperature detected by the temperature sensor 140. Upon completion of the processing in step S101, the control circuit 170 determines whether mounting of the power reception device 200 is detected (step S102). For example, the control circuit 170 transmits a signal to the power reception device 200 using the power transmission circuit 160. In response to reception of a response to this signal from the power reception device 200, the control circuit 170 determines that mounting of the power reception device 200 is detected. Upon completion of the processing in step S102, the control circuit 170 determines whether the first specified time has elapsed since end of the previous power supply (step S 103). The control circuit 170 can determine the time of end of the previous power supply by referring to the power supply end time information stored in the flash memory of the control circuit 170. The power supply end time information indicates the time of end of the power supply, and is, for example, information stored in flash memory each time the power supply ends.

Upon determining that the first specified time has elapsed since end of the previous power supply (Yes in step S 103), the control circuit 170 determines whether the rate of change in the detection temperature is within the reference value (step S104). For example, the control circuit 170 determines whether the difference between the maximum detection temperature and the minimum detection temperature during the most recent specified period is equal to or less than the reference width. Upon determining that the rate of change in the detection temperature is within the reference value (Yes in step S 104), the control circuit 170 sets the detection temperature to the reference temperature (step S 105). In other words, the control circuit 170 updates the reference temperature to the current detection temperature. Upon completion of the processing in step S105, the control circuit 170 sets the interruption temperature and the resumption temperature based on the reference temperature (step S106).

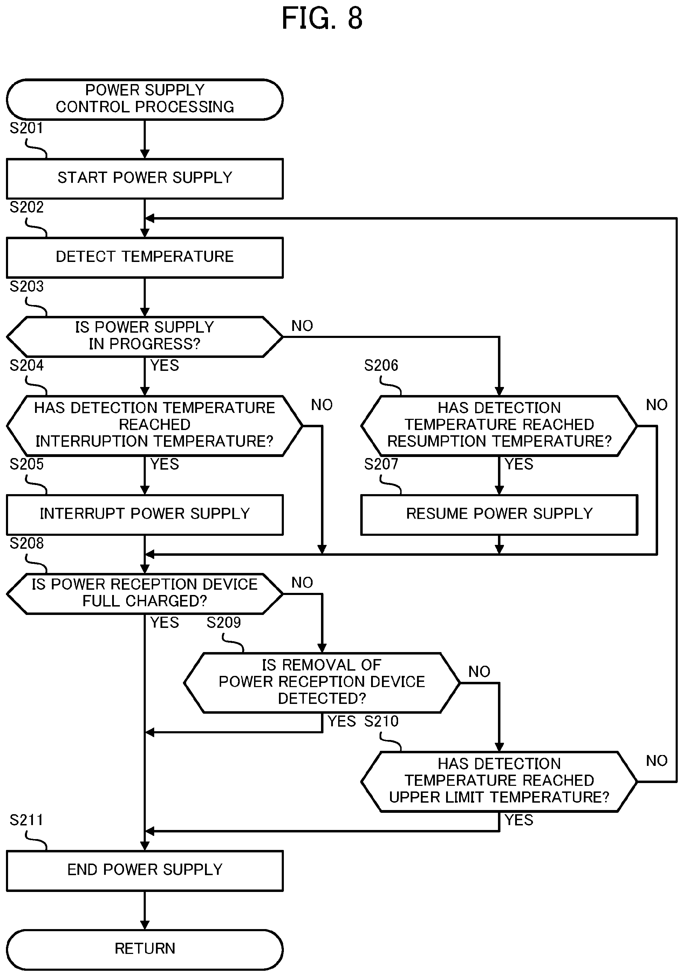

Upon determining that the first specified time has not elapsed since end of the previous power supply (No in step S 103), determining that the rate of change in the detection temperature is not within the reference value (No in step S104), or completion of the processing of step S106, the control circuit 170 executes the power supply control processing (step S107). The power supply control processing is described below with reference to the flowchart illustrated in FIG. 8. First, the control circuit 170 starts power supply (step S201). For example, the control circuit 170 starts power supply to the power reception device 200 via the power transmission circuit 160. Upon completion of the processing in step S201, the control circuit 170 detects the temperature (step S202). Upon completion of the processing in step S202, the control circuit 170 determines whether power supply is in progress (step S203). Upon determining that power supply is in progress (Yes in step S203), the control circuit 170 determines whether the detection temperature has reached the interruption temperature (step S204). Upon determining that the detection temperature has reached the interruption temperature (Yes in step S204), the control circuit 170 interrupts power supply (step S205). In other words, the control circuit 170 controls the power transmission circuit 160 to temporarily stop power supply to the power reception device 200.

Upon determining that the power supply is not in progress (No in step S203), the control circuit 170 determines whether the detection temperature has reached the resumption temperature (step S206). Upon determining that the detection temperature has reached the resumption temperature (Yes in step S206), the control circuit 170 resumes power supply (step S207). In other words, the control circuit 170 controls the power transmission circuit 160 to restart power supply to the power reception device 200. Upon determining that the detection temperature has not reached the interruption temperature (No in step S204), determining that the detection temperature has not reached the resumption temperature (No in step S206), or completion of the processing in step S205 or step S207, the control circuit 170 determines whether the power reception device 200 is fully charged (step S208). For example, upon receiving from the power reception device 200 a signal indicating that power reception device 200 is fully charged, the control circuit 170 determines that the power reception device 200 is fully charged.

Upon determining that the power reception device 200 is not fully charged (No in step S208), the control circuit 170 determines whether the removal of the power reception device 200 is detected (step S209). Upon determining that the removal of the power reception device 200 is not detected (No in step S209), the control circuit 170 determines whether the detection temperature has reached the upper limit temperature (step S210). Upon determining that the detection temperature has not reached the upper limit temperature (No in step S210), the control circuit 170 returns the processing to step S202. Upon determining that the power reception device 200 is fully charged (Yes in step S208), determining that the removal of the power reception device 200 is detected (Yes in step S209), or determining that the detection temperature has reached the upper limit temperature (Yes in step S210), the control circuit 170 ends power supply (step S211). Upon completion of the processing in step S211, the control circuit 170 completes the power supply control processing. Once completion of the power supply control processing in step S107, the control circuit 170 returns the processing to step S101.

In the present embodiment, in a case where, at start of power supply, the first specified time has elapsed since end of the previous power supply, and a rate of change in the detection temperature in a specified period immediately before the start of power supply is within a reference value, the reference temperature is updated to the detection temperature that is at the start of power supply. Thus, in the present embodiment, the reference temperature for use in power supply control is suppressed from being set to an excessively high value. Thus, the present embodiment can achieve appropriate power supply based on the detection temperature. In the present embodiment, power supply is interrupted in response to the detection temperature having increased to the interruption temperature based on the reference temperature during power supply, and power supply is resumed in response to the detection temperature having decreased to the resumption temperature based on the reference temperature during interruption of power supply. The present embodiment can achieve appropriate power supply within a range where the detection temperature does not exceed the interruption temperature.

In the present embodiment, in response to the detection temperature having increased to a predetermined upper limit temperature during power supply, the power supply ends. The present embodiment ensures that excessive temperature rise due to power supply is reliably prevented. Also, in the present embodiment, the temperature of the heat conduction member 132 disposed between the power reception device 200 and the power transmission coil 130 with the power reception device 200 mounted on the placement surface 131A is detected as the detection temperature. The present embodiment can achieve appropriate power supply based on the detection temperature in non-contact power supply.

Next, Embodiment 2 is described. Unlike Embodiment 1, in which the temperature difference between the detection temperature at the start of power supply and the reference temperature is not considered, in the present embodiment, the temperature difference between the detection temperature at the start of power supply and the reference temperature is considered. Similar configurations and functions to those of Embodiment 1 are appropriately omitted or simplified. In the present embodiment, in a case where, at the start of power supply, the first specified time has elapsed since the end of the previous power supply, the rate of change is within the reference value, and the temperature difference between the detection temperature at the start of power supply and the reference temperature is within the temperature difference threshold, the control circuit 170 updates the reference temperature to the detection temperature that is at the start of power supply. In other words, the control circuit 170 does not update the reference temperature in a case where, at the start of power supply, the first specified time has elapsed since the end of the previous power supply, and, even if the rate of change is within the reference value, the temperature difference between the detection temperature at the start of power supply and the reference temperature exceeds the temperature difference threshold.

For example, in FIG. 6, d10 is a detection temperature at t10, d31 is a detection temperature at t31, d30 is a detection temperature at t30, D31 is a temperature difference between d31 and d30, D32 is a temperature difference between d10 and d30, T31 is a time length from t14 to t30, T1 is a length of the first specified time, D1 is a reference width, and D4 is a temperature difference threshold. At the time of t30, the reference temperature is d10. In a case where T31 is equal to or greater than T1, D31 is equal to or less than D1, and D32 is equal to or less than D4, the reference temperature is updated from d10 to d30. On the other hand, in a case where T31 is equal to or greater than T1, D31 is equal to or less than D1, and D32 is greater than D4, the reference temperature is not updated.

The reason for considering the temperature difference between the detection temperature at the start of power supply and the reference temperature is to further suppress an excessively high reference temperature from being set. For example, in a case where power supply starts immediately after end of the previous power supply, the detection temperature may not significantly decrease immediately before start of the power supply for some reason. In this case, without consideration of the temperature difference between the detection temperature at the start of power supply and the reference temperature, an excessively high detection temperature may be set as the reference temperature. On the other hand, with the temperature difference between the detection temperature at the start of power supply and the reference temperature considered, an excessively high detection temperature is suppressed from being set as the reference temperature. For example, even if the power supply starts while the detection temperature remains abnormally high for some reason, updating the reference temperature to the elevated detection temperature is suppressed. The temperature difference between the detection temperature at the start of power supply and the reference temperature being equal to or less than the temperature difference threshold basically means the current detection temperature having decreased to a value near the detection temperature at the start of the previous power supply.

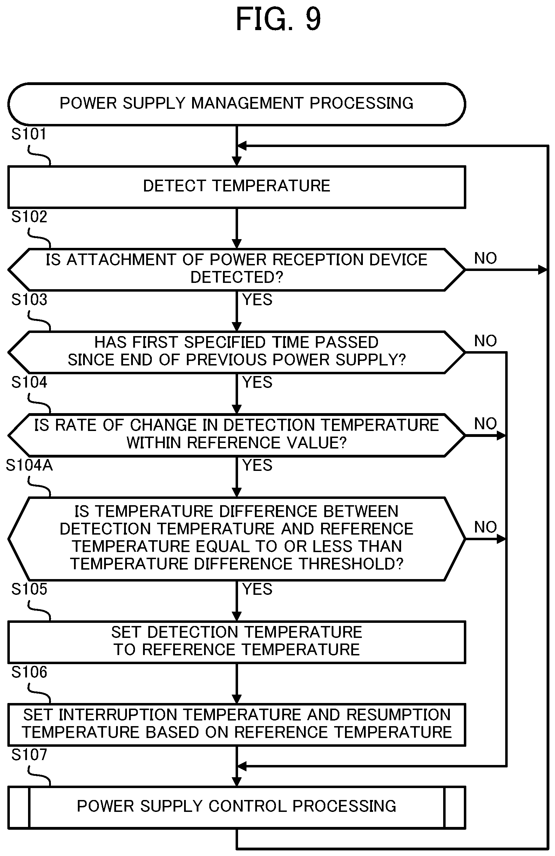

The power supply management processing executed by the power supply device 100 is described below with reference to the flowchart illustrated in FIG. 9. The processing from step S101 to step S103 are as described in Embodiment 1. Upon determining that the first specified time has elapsed since end of the previous power supply (Yes in step S103), the control circuit 170 determines whether the rate in change in the detection temperature is within the reference value (step S104). Upon determining that the width of change in the detection temperature is within the reference width (Yes in step S104), the control circuit 170 determines whether the temperature difference between the detection temperature and the reference temperature is equal to or less than the temperature difference threshold (step S104). Upon determining that the temperature difference between the detection temperature and the reference temperature is equal to or less than the temperature difference threshold (Yes in step S104A), the control circuit 170 sets the detection temperature to the reference temperature (step S105). Upon completion of the processing in step S105, the control circuit 170 sets the interruption temperature and the resumption temperature based on the reference temperature (step S106). Upon determining that the first specified time has not elapsed since end of the previous power supply (No in step S103), determining that the rate of change in the detection temperature is not within the reference value (No in step S104A), or determining that the temperature difference between the detection temperature and the reference temperature is not equal to or less than the temperature difference threshold (No in step S104A), or completion of the processing in step S106, the control circuit 170 executes the power supply control processing (step S107).

In the present embodiment, in a case where, at start of power supply, the first specified time has elapsed since end of the previous power supply, the rate of change is within the reference value, and the temperature difference between the detection temperature at the start of power supply and the reference temperature is within the temperature difference threshold, the reference temperature is updated to the detection temperature that is at the start of power supply. Thus, in the present embodiment, the reference temperature for use in power supply control is further suppressed from being set to an excessively high value. Thus, the present embodiment can achieve appropriate power supply based on the detection temperature.

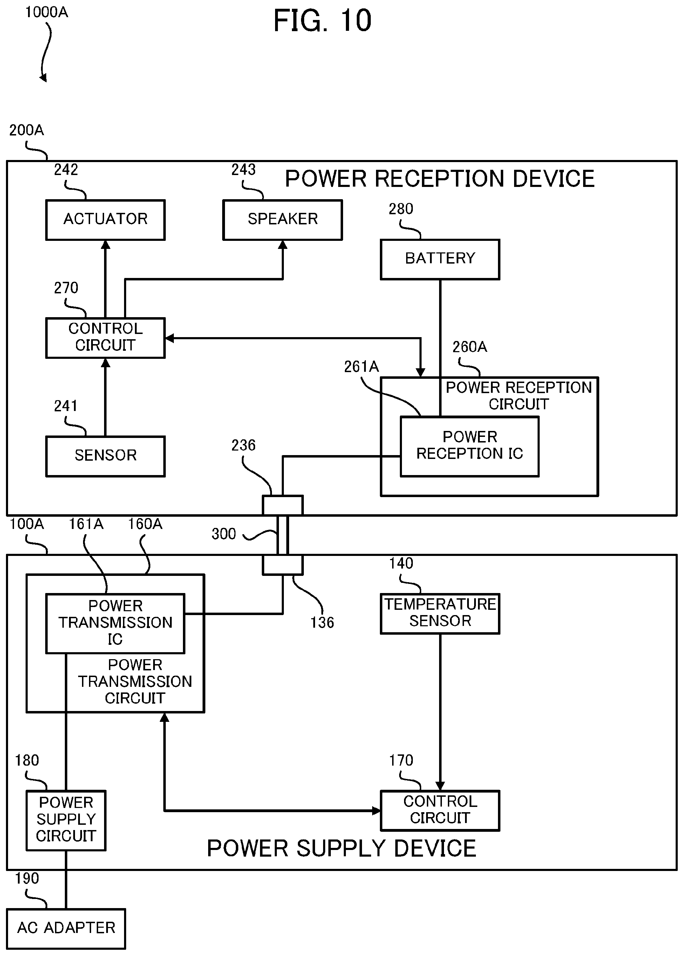

Next, Embodiment 3 is described. In Embodiment 1, the power supply control is applied to non-contact power supply, whereas in Embodiment 3, the power supply control is applied to contact-based power supply. The configurations and functions similar to those in Embodiments 1 and 2 are omitted or simplified as appropriate. As illustrated in FIG. 10, the power transmission system 1000A in the present embodiment includes a power supply device 100A, a power reception device 200A, and a power supply cable 300. The power supply device 100A includes a connector 136, a temperature sensor 140, a power transmission circuit 160A, a control circuit 170, and a power supply circuit 180. The power reception device 200A includes a connector 236, a sensor 241, an actuator 242, a speaker 243, a power reception circuit 260A, a control circuit 270, and a battery 280.

The connector 136 is a connector to which one end of the power supply cable 300 is connected. The connector 136 is connected to the power transmission circuit 160A. The power transmission circuit 160A is a circuit designed to supply power to the power reception device 200A via the power supply cable 300. For example, the power transmission circuit 160A supplies direct current power based on the direct current power supplied by the power supply circuit 180 to the power reception device 200A via the power supply cable 300. The power transmission circuit 160A includes a power transmission IC 161A. The power transmission IC 161A converts the direct current power generated by the power supply circuit 180 into the desired direct current power. The connector 236 is a connector to which the other end of the power supply cable 300 is connected. The connector 236 is connected to the power reception circuit 260A. The power reception circuit 260A is a circuit designed to receive power from the power supply device 100A via the power supply cable 300. For example, the power reception circuit 260A supplies direct current power based on the direct current power supplied by the power supply device 100A to the battery 280 via the power supply cable 300. The power reception circuit 260A includes a power reception IC 261A. The power reception IC 261A converts the direct current power supplied by the power supply device 100A into the desired direct current power.

The temperature sensor 140 detects the temperature of a predetermined part of the power supply device 100A. For example, the temperature sensor 140 detects the temperature around the power transmission circuit 160A. The temperature sensor 140 supplies temperature information indicating the detection temperature to the control circuit 170. The control circuit 170 executes power supply control based on the detection temperature indicated by the temperature information. The power supply control in the present embodiment is essentially the same as the power supply control in Embodiment 1. The power transmission circuit 160A is an example of the predetermined part. The control circuit 170 stops power supply in response to the detection temperature having increased to the interruption temperature based on the reference temperature during power supply. The control circuit 170 resumes power supply in response to the detection temperature having decreased to the resumption temperature based on the reference temperature after interruption of power supply. In a case where, at start of power supply, a first specified time has elapsed since end of the previous power supply, and a rate of change in the detection temperature in a specified period immediately before the start of power supply is within a reference value, the control circuit 170 updates the reference temperature to the detection temperature that is at the start of power supply.

According to the present embodiment, similar effects to those in Embodiment 1 are achieved. Specifically, in the present embodiment, the reference temperature for use in power supply control is also suppressed from being set to an excessively high value. Thus, the present embodiment also enables appropriate power supply based on the detection temperature.

Although the embodiments are described above, the embodiments can be modified or applied in various manners. Any part of the configurations, functions, and operations described in the above embodiments may be employed. Further, besides the configurations, functions, and operations described above, additional configurations, functions, and operations may be employed. Further, the configurations, functions, and operations described in the above embodiments can be freely combined. In Embodiment 1, an example is described where the interruption temperature and the resumption temperature are set based on the reference temperature, and power supply is controlled based on the interruption temperature and the resumption temperature. Alternatively, end temperature may be set based on the reference temperature, and power supply may be controlled based on the end temperature. For example, in a case where the detection temperature has increased to the end temperature, the power supply may be ended instead of interrupted.

In Embodiment 1, an example is described where power supply to the power reception device 200 is stopped in response to detection of the power reception device 200 being fully charged. Alternatively, in a case the power reception device 200 being fully charged is detected, the level of power supply may be reduced compared to normal power supply and the power supply to the power reception device 200 may be continued. Even in such a case, it is preferable that power supply is interrupted in response to the detection temperature reaching the interruption temperature and resumed in response to the detection temperature reaching the resumption temperature.

In Embodiment 1, an example is provided where, even if sufficient time has elapsed since the previous power supply, the reference temperature is not updated in a case where the rate of change in the detection temperature during the specified period immediately before starting the power supply exceeds the reference value. However, in a case where sufficient time has elapsed since the previous power supply, it is considered that the detection temperature has significantly decreased and settled near room temperature. In this case, even if the reference temperature is updated to the detection temperature, the likelihood of the reference temperature being set to an excessively high value is considered low. Thus, in a case where, at the start of power supply, a second specified time longer than the first specified time has elapsed since end of the previous power supply, the control circuit 170 may update the reference temperature to the detection temperature that is at the start of the power supply, regardless of the rate of change in the detection temperature during the specified period immediately before the power supply. In other words, in a case where sufficient time has elapsed since the previous power supply and the detection temperature has settled near room temperature, the control circuit 170 updates the reference temperature to the detection temperature that is at the start of power supply. The second specified time is the time considered necessary for the detection temperature having increased due to the power supply to sufficiently decrease. With this configuration, appropriate power supply based on the detection temperature and suitable reference temperature can be achieved.

In Embodiment 1, an example is described where the power reception device 200 is a robot imitating a small animal. The power reception device 200 may be another type of robot or even non-robot device. For example, the power reception device 200 could be a smartphone, an electronic dictionary, a gaming device, or similar items. The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A power supply device (100) comprising:
a power supplier (160) to supply power to a power reception device (200); and
a temperature detector (140) to detect temperature of a predetermined part;
**characterized by**
a controller (170) to control power supply by the power supplier (160) to the power reception device (200) based on reference temperature and detection temperature detected by the temperature detector (140),
the controller (170) being configured to
in a case where, at start of power supply, a first specified time has elapsed since end of a previous power supply and a rate of change in the detection temperature during a specified period immediately before the start of power supply is within a reference value, update the reference temperature to the detection temperature that is at the start of power supply.

2. The power supply device (100) according to claim 1, wherein
the controller (170) is configured to
interrupt power supply in response to the detection temperature having increased to the interruption temperature based on the reference temperature during power supply, and resume power supply in response to the detection temperature having decreased to the resumption temperature based on the reference temperature during interruption of power supply.

3. The power supply device (100) according to claim 1 or 2, wherein
the controller (170) is configured to
update the reference temperature to the detection temperature that is at the start of power supply in a case where, at the start of power supply, the first specified time has elapsed since the end of the previous power supply, the rate of change is within the reference value, and a temperature difference between the detection temperature at the start of power supply and the reference temperature is equal to or less than a temperature difference threshold.

4. The power supply device (100) according to claim 1 or 2, wherein
the controller (170) is configured to
in a case where, at the start of power supply, the first specified time has elapsed since the end of the previous power supply and a temperature difference between the detection temperature at the start of power supply and the reference temperature exceeds a temperature difference threshold, maintain the reference temperature without updating the reference temperature even in a case where the rate of change is within the reference value.

5. The power supply device (100) according to claim 1 or 2, wherein
the controller (170) is configured to
in a case where, at the start of power supply, a second specified time that is longer than the first specified time has elapsed since the end of the previous power supply, update the reference temperature to the detection temperature that is at the start of power supply, regardless of the rate of change.

6. The power supply device (100) according to claim 1 or 2, wherein
the controller (170) is configured to
maintain the reference temperature without updating the reference temperature in a case where, at the start of power supply, the first specified time has not elapsed since the end of the previous power supply.

7. The power supply device (100) according to claim 1 or 2, wherein
the resumption temperature is set to be higher than the reference temperature.

8. The power supply device (100) according to claim 7, wherein
a temperature difference between the reference temperature and the resumption temperature is set to be smaller than a temperature difference between the reference temperature and the interruption temperature.

9. A power supply method comprising processing of:
detecting temperature of a predetermined part;
**characterized by** processing of
controlling power supply to a power reception device (200) based on detection temperature that is the detected temperature and reference temperature; and
in a case where, at start of power supply, a first specified time has elapsed since end of a previous power supply and a rate of change in the detection temperature during a specified period immediately before the start of power supply is within a reference value, updating the reference temperature to the detection temperature that is at the start of power supply.

10. A program **characterized by** causing a computer of a power supply device (100) comprising a power supplier (160) to supply power to a power reception device (200) and a temperature detector (140) to detect temperature of a predetermined part, to achieve a function of:
controlling power supply by the power supplier (160) to the power reception device (200) based on reference temperature and detection temperature detected by the temperature detector (140), wherein
in a case where, at start of power supply, a first specified time has elapsed since end of a previous power supply and a rate of change in the detection temperature during a specified period immediately before the start of power supply is within the reference value, the function includes updating the reference temperature to the detection temperature that is at the start of power supply.
